Europäisches Patentamt

(19) European Patent Office

Office européen des brevets

(11) Publication number: **0 042 923**
**B1**

(12) **EUROPEAN PATENT SPECIFICATION**

(45) Date of publication of patent specification: **07.08.85**

(51) Int. Cl.⁴: **B 41 J 3/20, C 25 B 11/04**

(21) Application number: **81102942.0**

(22) Date of filing: **16.04.81**

(54) **Electrolytic printing electrode.**

(30) Priority: **30.06.80 US 164388**

(43) Date of publication of application:
**06.01.82 Bulletin 82/01**

(45) Publication of the grant of the patent:
**07.08.85 Bulletin 85/32**

(84) Designated Contracting States:
**DE FR GB IT**

(56) References cited:
**DE-A-2 114 543**
**DE-A-2 532 553**
**US-A-3 773 555**
**US-A-4 042 936**

(73) Proprietor: **International Business Machines Corporation**
**Old Orchard Road**
**Armonk, N.Y. 10504 (US)**

(72) Inventor: **Mitchell, Joseph William**
**3 Crystal Court**
**New York 10548 (US)**
Inventor: **Shafer, Merrill Wilbert**
**105 Loder Road**
**Yorktown Heights New York 10598 (US)**
Inventor: **Sambucetti, Carlos Juan**
**4 Sassi Drive**
**Croton-on-Hudson New York 10520 (US)**

(74) Representative: **Ahlman, Bertel**
**IBM Svenska AB Box 962**
**S-18 109 Lidingö (SE)**

Courier Press, Leamington Spa, England.

## Description

This invention relates to electrolytic printing electrodes and methods for making the same.

Electrolytic printers are currently available which employ non-consumable electrodes. A non-consumable electrode is defined as one which does not participate in the chemical reaction which produces the resulting image. While these non-consumable electrodes do not participate in the reaction, they have been found to be subject to substantial wear.

In US—A—3,761,954 it is suggested that wear might be the result of corrosion due to arcing and other atmospheric conditions at the tip of the electrode. It is also suggested that iridium has been found to be an acceptable material for printing electrodes since it is a good conductor and also highly resistant to the corrosion that occurs at the tip of the electrode when it is in actual use.

In US—A—4,042,936, the use of electrodes made from tungsten, iridium, silver, stainless steel or the like, is suggested. It is pointed out that one of the problems associated with electrolytic printing is wear of the electrodes and suggested that the problem may be overcome by employing a special printing medium.

While noble metal oxides have been employed for electrode materials for the electrolysis of aqueous solutions containing alkaline metal halides, these solutions are not analogous to the solutions employed in electrolytic printing.

In US—A—4,100,050 it is suggested that for a highly alkaline liquor employed in electrolysis, the rate of consumption of noble metal electrodes is greater than that of the noble metal oxide electrodes. It is reported that the consumption rate is reduced by about an order of magnitude when a ruthenium electrode is replaced with a ruthenium oxide ($RuO_2$) electrode. It should be pointed out that the liquors or solutions used for electrolysis are substantially more corrosive than those employed in electrolytic printing operations.

It is nowhere suggested in the prior art that the wear rate of an electrode used for electrolytic printing is related to the dissolution rate of electrodes used in electrolysis.

The invention seeks to provide a wear resistant electrode for electrolytic printing, and in particular a coating for a metallic electrode which will enhance the wear resistance of the resulting electrode.

According to the invention, an electrode for electrolytic printing on a printing medium, is characterised by a region which is of an oxide of a metal from the group of Ru, Ir, Rh, Pt, or an alloy thereof, the oxide region being at an extremity of the electrode, which during printing is in close proximity to the printing medium.

The invention also seeks to provide a method for applying a protective layer to an electrode to enhance the life of the electrode, and for adhering the protective layer to a metal substrate.

According to this other aspect of the invention, a method of fabricating an electrode tip on a metal substrate, comprises forming a $TiO_2$ layer onto the metal substrate, and forming an $RuO_2$ layer onto the $TiO_2$ layer.

The scope of the invention is defined by the appended claims; and how it can be carried into effect is hereinafter particularly described with reference to the accompanying drawings, in which:—

Figure 1 is a schematic representation of one embodiment of an electrode according to the present invention; and

Figure 2 is a schematic representation of an electrode test configuration employed for comparative wear studies.

The present invention is an improved electrode for use in electrolytic printers. The electrode has a region which is an oxide of a metal from the group of ruthenium, iridium, rhodium, platinum or an alloy thereof. The oxide region is at the extremity of the electrode and during printing this region is in close proximity to the printing medium.

The present invention also provides a method for attaching a region of the metal oxide to a metal substrate. The oxide region is attached by forming a titanium oxide layer onto the metal substrate and thereafter forming the oxide region onto the titanium oxide layer.

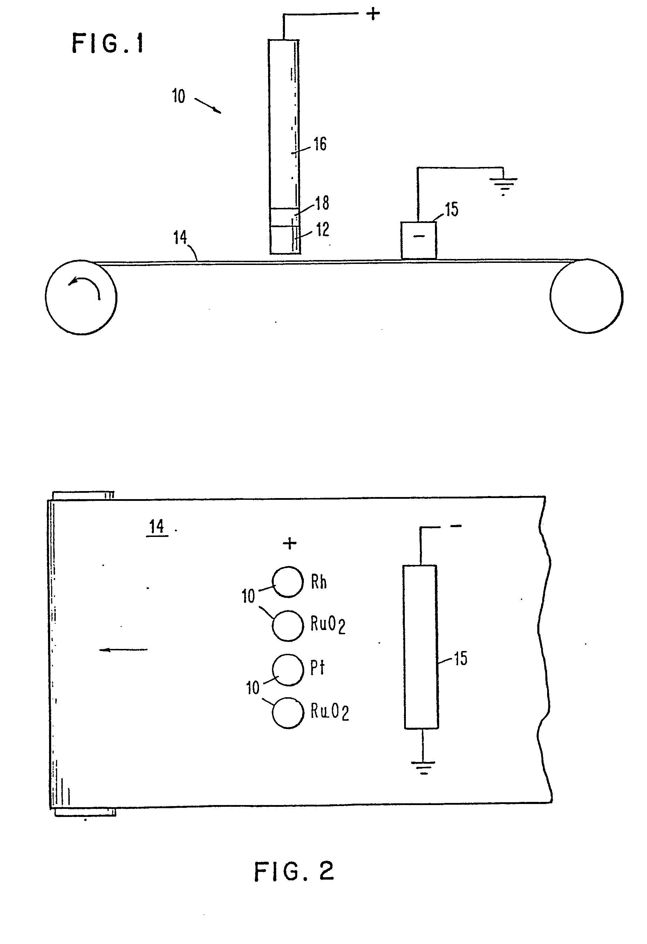

An electrode 10 (Fig. 1) for electrolytic printing on a printing medium has a region 12 which is an oxide of a metal from the group of ruthenium, iridium, rhodium, platinum, or an alloy thereof. The oxide region 12 is at the extremity of the electrode 10 which is held in closest proximity to a printing medium 14. A bus electrode 15 is maintained in contact with the printing medium 14. During printing the electrode 10 is maintained at an electrical potential which is higher than the electrical potential of the bus electrode 15.

Preferably, the electrode 10 has a body of plastic or ceramic, which is metallized to form a metal substrate 16 with an electrically conductive surface.

When the electrode 10 comprises a metal substrate 16 to which the oxide region 12 is attached, it is preferable to employ an intermediate layer 18 of titanium oxide ($TiO_2$) to ensure adhesion between the oxide region 12 and the metal substrate 16. It is found that the use of ruthenium oxide ($RuO_2$) provides a very wear resistant coating when applied to a metal substrate 16. It has also been found that the optimum thickness for the $RuO_2$ region is between about 5,000Å and 50,000Å.

A ruthenium oxide layer of 5,000Å is thick enough to provide good quality printing. A $RuO_2$ layer less than 5,000Å is not advisable because defects such as pinholes, adhesion failures, may occur in the $RuO_2$ layer. With $RuO_2$ layer thickness of about 50,000Å the electrode will print billions (milliards) of characters.

Likewise, it has been found that titanium oxide ($TiO_2$) provides a very effective bonding medium for the

2

ruthenium oxide layer 12. It has also been found that the most effective thickness for the titanium oxide layer is from about 200Å to about 10,000Å.

A layer of about 200Å of $TiO_2$ is of sufficient thickness to provide a good crystallographic substrate for the subsequent deposition of the $RuO_2$. The reason for employing the $TiO_2$ layer is that $TiO_2$ and $RuO_2$ have compatible crystal structures (rutile structures). A minimum thickness layer of about 200Å for the $TiO_2$ layer is necessary to provide sufficient crystallographic planes of the $TiO_2$ structure to superimpose the isomorph $RuO_2$ crystal. $TiO_2$ layers of up to 10,000Å have been found to work well when the underlying metal substrate is titanium or steel. The resistance of the metal electrode 10 is not increased significantly when the $TiO_2$ layer is maintained below about 10,000Å in thickness.

While the electrode 10 is shown as a composite structure in Fig. 1, it is possible to make an electrode which is composed of only the oxide, in particular $RuO_2$ in crystal form.

Comparative studies on different electrode materials were done with a series of cylindrical electrodes. Four electrodes 10 (a rhodium, a ruthenium oxide, a platinum, and another ruthenium oxide) were prepared and maintained in close proximity to the bus electrode 15, as shown in Fig. 2. The electrodes 10 were maintained at a positive potential with respect to the bus electrode 15. This potential produces a current between the electrodes 10 and bus electrode 15, which is carried by the printing medium 14. After the electrodes had been used for many print cycles, the bus electrode 15 was examined. It was found that opposite the ruthenium oxide electrodes there were no deposits on the surface of the bus electrode 15 whereas opposite the metallic electrodes (rhodium and platinum), deposits of rhodium and platinum, respectively, were found. This study indicates that a substantial portion of the wear results from metal transport from the metal electrodes 10 to the bus electrode 15. In analogous studies on Ru metal electrodes transport of Ru was observed.

In order to further characterize the improvement resulting from the use of ruthenium oxide, a series of cylindrical electrodes 0.5 mm (20 mil) in diameter were prepared and tested for $10^5$ printing cycles. The results of these tests are summarized in Table I.

TABLE I
Wear characteristic under
printing conditions

| Material | No. of print cycles | Wear microns |
|---|---|---|
| Pt | 100,000 | 20 μm |
| Ru | 100,000 | 26 μm |
| Rh | 100,000 | 16 μm |
| $TiO_2/RuO_2$ | 100,000 | <0.1 μm |

As can be seen from examination of the test data, the use of ruthenium oxide resulted in an increase of about two orders of magnitude in the wear resistance over either the platinum, rhodium or the ruthenium electrodes. The Ru electrode was fabricated by plating Ru onto a Pt cylinder. The increase in the wear rate over the other metal electrodes can be explained by the fact that deposited metals generally have reduced wear resistance. It should furthermore be pointed out that the inherent weakness of the deposited Ru does not occur when deposited Ru is subsequently oxidized.

The electrodes 10 had a 0.5 mm (20 mil) diameter. For the $TiO_2/RuO_2$ electrode a layer of 7,000Å $TiO_2$ was evaporated onto a Ti cross section and another layer of 30,000Å $RuO_2$ was deposited onto the $TiO_2$. A gold bus electrode 15, 2.5 mm long, 0.5 mm wide was set alongside the electrodes 10 at a distance from them of 0.1 mm. A positive voltage of 50 volts was applied to the electrodes 10, and the bus electrode 15 was earthed. Paper saturated with an electrolytic printing solution was used as the printing medium.

In addition to the wear that results from the printing process there is also wear associated with mechanical abrasion between the electrode and the printing medium. In order to characterize the mechanical wear, steel spheres 6.2 mm in diameter were plated with ruthenium oxide with an intermediate layer of titanium oxide. The spheres were rigidly held with 100 gm force applied between the sphere and the abrasive surface. The abrasive surface was chosen to simulate the characteristics of the printing medium. Wear tests were done both wet and dry. For comparative purposes steel spheres without the ruthenium oxide coating were tested. Steel was chosen as the most wear resistant.

These results are tabulated in Table II.

**0 042 923**

TABLE II

| Material | Test condition | Wear resulting from mechanical abrasive* |
|---|---|---|
| $RuO_2$ | wet | $1.27 \times 10^5 m/\mu m$ <br> ($5 \times 10^6$ in/$\mu m$) |
| $RuO_2$ | dry | $8.89 \times 10^3 m/\mu m$ <br> ($3.5 \times 10^5$ in/$\mu m$) |
| Steel | wet | $6.35 \times 10^3 m/\mu m$ <br> ($2.5 \times 10^5$ in/$\mu m$) |
| Steel | dry | $2.032 \times 10^2 m/\mu m$ <br> ($8 \times 10^3$ in/$\mu m$) |

(*) Wear is here measured in metres per micron (inches per micron) representing the length of paper that will pass under the head at 100 g force for the sample to wear 1 micron.

As can be seen from examination of the data the use of ruthenium oxide increases the wear resistance by about an order of magnitude. With a wear rate of $1 \times 10^{-4}$ μm per one hour, an oxide layer of approximately 50,000Å should be adequate to provide an electrode which would offer trouble free service for approximately 2 years. The thickness of the layer can be increased to increase the life expectancy of the electrode. However, an upper practical limit for the thickness of the ruthenium oxide for a composite electrode would be about 250,000Å or 25 microns (1 mil). A film or layer thickness of above 50 microns (2 mils) could introduce stress factors into the $RuO_2$ film.

A preferred general method for fabricating the improved electrode of this invention consists of building up a composite on a conductive substrate. The first layer is for bonding purposes and is isomorph with $RuO_2$, preferably $TiO_2$. The second layer should be an electronic conductor, with reduced mechanical and electrochemical wear and is preferably $RuO_2$.

A composite electrode can be fabricated with a metal substrate 16 onto which is formed a layer of titanium oxide 18. The titanium oxide layer may be formed by depositing titanium onto the substrate 16 and thereafter oxidizing the titanium layer, or alternatively reactive ion sputtering the titanium oxide layer directly onto the metal substrate. The preferred method of depositing Ti onto the metal substrate is by evaporation, or sputtering from Ti targets. This is followed by exposure to 5066.25 pascals (0.5 atmospheres) of $O_2$ at about 500°C. Alternatively, the metal substrate itself can be titanium. In this case, the intermediate bonding $TiO_2$ layer can easily be formed to receive the ruthenium oxide layer by heating in 5066.25 pascals (0.5 atmosphere) of $O_2$ at 200°C for 1 hour.

Onto the titanium oxide layer, a ruthenium oxide layer is formed. The ruthenium oxide layer can be formed either by depositing a ruthenium layer thereon and subsequently oxidizing the ruthenium or alternatively by reactive ion sputtering. The deposition of the ruthenium metal layer is accomplished by one of the following methods:

(a) electrolysis from aqueous ruthenium solutions,

(b) by evaporation, or

(c) by sputtering,

from Ru metal targets. Once formed, the Ru layer is oxidized by $RuO_2$ by exposure to 5066.25 pascals (0.5 atmospheres) of $O_2$ at 500°C. The electrolytic deposition method is preferred because it does not require any masking.

**Claims**

1. An electrode for electrolytic printing on a printing medium, characterized by a region (12) which is of an oxide of a metal from the group of Ru, Ir, Rh, Pt, or an alloy thereof, the oxide region (12) being at an extremity of the electrode, which during printing is in close proximity to the printing medium (14).

2. An electrode according to claim 1, in which the oxide is $RuO_2$.

3. An electrode according to claim 2, in which the thickness of the $RuO_2$ layer is between about 5,000Å and 50,000Å.

4. An electrode according to claim 2 or 3, including an intermediate layer of $TiO_2$ between the region of $RuO_2$ and the body of the electrode.

5. An electrode according to claim 4, in which the thickness of the layer of $TiO_2$ is between about 200Å and 10,000Å.

6. An electrode according to any preceding claim in which the electrode includes an electrically conductive surface upon a substrate of metallized plastic or ceramic.

7. An electrode according to claim 6, in which the substrate metallization is of titanium.

4

8. A method of fabricating an electrode tip on a metal substrate, comprising forming a $TiO_2$ layer (18) onto the metal substrate (16), and forming an $RuO_2$ layer (12) onto the $TiO_2$ layer.

9. A method according to claim 8, in which the $TiO_2$ layer is formed by deposition of a layer of Ti about 200Å to 1,000Å thick onto the metal substrate, and the subsequent oxidation of the Ti layer by heating the Ti layer to about 500°C and exposing to oxygen at an oxygen pressure of about 5066.25 pascals (0.5 atmospheres).

10. A method according to claim 8 or 9, in which the $RuO_2$ layer is formed by deposition of a layer of Ru about 5,000Å to 50,000Å onto the $TiO_2$ layer, and subsequent oxidation of the Ru layer by heating to 500°C and exposing to oxygen with an oxygen pressure of about 5066.25 pascals (0.5 atmospheres).

## Patentansprüche

1. Elektrode für ein elektrolytisches Drucken auf einem Druckmedium, gekennzeichnet durch einen Bereich (12), welcher aus einem Oxid eines Metalls aus der Gruppe aus Ru, Ir, Rh, Pt oder einer Legierung derselben besteht, wobei der Oxidbereich (12) sich an einem Ende der Elektrode befindet, das sich während des Druckens in unmittelbarer Nähe zum Druckmedium (14) befindet.

2. Elektrode nach Anspruch 1, bei welcher das Oxid $RuO_2$ ist.

3. Elektrode nach Anspruch 2, bei welcher die Dicke der $RuO_2$-Schicht zwischen ungefähr 5000Å und 50000Å beträgt.

4. Elektrode nach Anspruch 2 oder 3, welche eine Zwischenschicht aus $TiO_2$ zwischen dem Bereich aus $RuO_2$ und dem Elektrodenkörper enthält.

5. Elektrode nach Anspruch 4, bei welcher die Dicke der Schicht aus $TiO_2$ zwischen ungefähr 200Å und 10000Å beträgt.

6. Elektrode nach irgendeinem vorstehenden Anspruch, bei welcher die Elektrode eine elektrisch leitende Oberfläche auf einem Substrat aus metallisiertem Kunststoff oder metallisierter Keramik enthält.

7. Elektrode nach Anspruch 6, bei welcher die Substratmetallisierung aus Titan ist.

8. Verfahren zur Herstellung einer Elektrodenspitze auf einem Metallsubstrat, welches das Ausbilden einer $TiO_2$-Schicht (18) auf dem Metallsubstrat (16) und das Ausbilden einer $RuO_2$-Schicht (12) auf der $TiO_2$-Schicht umfaßt.

9. Verfahren nach Anspruch 8, bei welcher die $TiO_2$-Schicht durch Abscheiden einer Schicht aus Ti einer Dicke von ungefähr 200Å bis 1000Å auf dem Metallsubstrat und nachfolgende Oxidation der Ti-Schicht durch Erwärmung Ti-Schicht auf ungefähr 500°C unter Sauerstoff bei einem Sauerstoffdruck von ungefähr 5066,25 Pascal (0,5 Atmosphären) ausgebildet wird.

10. Verfahren nach Anspruch 8 oder 9, bei welchem die $RuO_2$-Schicht durch Abscheiden einer Schicht aus Ru einer Dicke von ungefährt 5000Å bis 50000Å auf der $TiO_2$-Schicht und nachfolgende Oxidation der Ru-Schicht durch Erwärmen auf 500°C unter Sauerstoff bei einem Sauerstoffdruck von ungefähr 5066,25 Pascal (0,5 Atmosphären) ausgebildet wird.

## Revendications

1. Un électrode d'impression électrolytique sur un support d'impression, caractérisée par une région (12) qui est formée d'un oxyde d'un métal du groupe Ru, Ir, Rh, Pt, ou d'un alliage de ceux-ci, la région en oxyde (12) étant placée à une extrémité de l'électrode, qui est située pendant l'impression à proximité étroite du support d'impression (14).

2. Une électrode selon la revendication 1, dans laquelle l'oxyde est $RuO_2$.

3. Une électrode selon la revendication 2, dans laquelle l'épaisseur de la couche de $RuO_2$ est comprise entre 5000Å et 50 000Å.

4. Une électrode selon la revendication 2 ou 3, comportant une couche intermédiaire de $TiO_2$ entre la région de $RuO_2$ et le corps de l'électrode.

5. Une électrode selon la revendication 4, dans laquelle l'épaisseur de la couche de $TiO_2$ est comprise entre 200Å et 10 000Å.

6. Une électrode selon une quelconque des revendications précédentes dans laquelle l'électrode comprend une surface électriquement conductrice sur un substrat en céramique ou matière plastique métallisée.

7. Une électrode selon la revendication 6, dans laquelle la métallisation du substrat est en titane.

8. Un procédé de fabrication d'un embout d'électrode sur un substrat métallique, consistant à former une couche de $TiO_2$ (18) sur le substrat métallique (16) et à former une couche de $RuO_2$ (12) sur la couche de $TiO_2$.

9. Un procédé selon la revendication 8, dans lequel la couche de $TiO_2$ est formée par dépôt d'une couche de Ti d'environ 200Å à 1000Å d'épaisseur sur le substrat métallique et par oxydation ultérieure de la couche de Ti en chauffant la couche de Ti à environ 500°C et en l'exposant à l'oxygène avec une pression d'oxygène d'environ 5066,25 Pascals (0,5 atmosphère).

10. Un procédé selon la revendication 8 ou 9, dans lequel la couche de $RuO_2$ est formée par dépôt d'une couche de Ru d'environ 5000Å à 50 000Å sur la couche de $TiO_2$ et par oxydation ultérieure de la couche de Ru par chauffage à 500°C et par exposition à l'oxygène avec une pression d'oxygène d'environ 5066,25 Pascals (0,5 atmosphère).

FIG.1

FIG. 2

1